# FASCICULE DE BREVET EUROPEEN

(11) **EP 1 196 715 B1**
(45) Date de publication et mention de la délivrance du brevet: **11.02.2004**
(21) Numéro de dépôt: 00949535.9
(22) Date de dépôt: 13.06.2000
(51) Int. Cl.: F16L 57/00

(54) **DISPOSITIF LIMITEUR DE PROPAGATION D'UNE DEFORMATION DANS UN TUBE A DOUBLE PAROI ENROULE**
VORRICHTUNG ZUR BEGRENZUNG DER AUSBREITUNG EINER DEFORMATION IN EINEM DOPPELWANDIGEM, GEWICKELTEM ROHRSTRANG
DEVICE FOR LIMITING PROPAGATION OF DEFORMATION IN A WOUND DOUBLE-WALLED TUBE

(30) Priorité: 02.07.1999 FR 9908540
(43) Date de publication de la demande: 17.04.2002
(73) Titulaire: Technip France, 92400 Courbevoie (FR)
(72) Inventeur: BASTARD, Antoine, F-27230 Thiberville (FR); REMERY, Jeroen, F-76000 Rouen (FR)
(74) Mandataire: Bertrand, Didier
(86) Numéro de dépôt international: PCT/FR2000/001633
(87) Numéro de publication internationale: WO 2001/002767

(56) Documents cités:
- FR-A- 2 406 747
- US-A- 5 803 127
- US-A- 5 865 378

## Description

La présente invention concerne un dispositif pour limiter ou arrêter la propagation d'une déformation dans un tube à double paroi enroulé sur une bobine et plus particulièrement dans un tube rigide utilisé pour le transport de fluides tels que des hydrocarbures.

La pose d'un tube ou conduite rigide sur un fond marin est effectuée le plus souvent à partir d'un navire dit de pose. La pose est dite en S lorsque le tube affecte la forme d'un S entre le navire de pose et le fond marin et elle est dite en J lorsque le tube affecte la forme d'un J. Dans ce dernier cas, une rampe de guidage est prévue sur le navire de pose, laquelle rampe pouvant être parfois immergée partiellement dans l'eau.

Le tube rigide à poser est stocké sur le navire de pose soit en tronçons de tube de longueur donnée mais relativement courte, les tronçons de tube étant reliés ensemble au fur et à mesure de la pose, soit enroulé en grande longueur sur une bobine, le tube étant alors déroulé de ladite bobine pendant l'opération de pose. Ces opérations de pose sont décrites dans le document API (American Petroleum Institute) Recommended Practice 17 A de 1987.

Lorsque le tube a quitté le navire et lors de la pose dudit tube, il est important que ce dernier ne subisse pas de déformation plastique en flexion qui entraînerait une ovalisation du tube, laquelle ovalisation provoquant un "point singulier faible" qui favoriserait l'initiation d'un écrasement ("collapse" en anglais). Par ailleurs, lorsque le tube est posé sur un fond marin à des profondeurs importantes d'eau (typiquement supérieures à 300 m et pouvant atteindre 2000 m et davantage), la pression hydrostatique s'exerçant sur le tube peut être suffisante pour initier une déformation qui a tendance à se propager le long du tube, dans les deux directions. Bien entendu, la formation de la déformation se fera, en priorité sur un "point singulier faible" lorsqu'il existe sur le tube. Lorsque la déformation se produit, il est alors nécessaire de remplacer au moins la section ou partie du tube comportant la zone déformée ou écrasée.

Pour éviter la propagation de la ou des déformations locales, il a été proposé de doter le tube de certains dispositifs ou organes, dénommés des limiteurs de déformation ("buckle arrestor" en anglais).

De tels limiteurs de déformation sont décrits dans les brevets US n° 2 425 800, 3 747 356, 3 768 269 et 4 364 692.

Dans US 3 747 356, le procédé consiste à relier un cylindre à un câble, de loger le cylindre à l'intérieur d'une section de tube puis de dérouler en même temps le tube et le câble, de manière à maintenir le cylindre dans la section de tube pendant la pose de cette dernière jusqu'au contact du tube avec le fond marin. Puis on remonte le cylindre pour le loger dans une autre section de tube à poser et qui est reliée à la précédente. De ce fait, toute déformation susceptible de se produire, pendant la pose du tube, entre le navire de pose et le fond marin est immédiatement arrêtée et n'est donc pas autorisée à se propager le long des sections du tube. Toutefois, une telle proposition ne présente aucune solution ou efficacité pour arrêter les déformations susceptibles de se propager après la pose définitive du tube sur le fond marin.

Dans US 3 768 269, il est proposé d'augmenter localement la rigidité du tube en disposant, à intervalles réguliers, par exemple à des intervalles compris entre 100 m et 500 m, des bagues de renfort dont la longueur est comprise entre 1 m et 2,5 m. Une telle solution n'est valable que pour des tubes posés par sections car les bagues de renfort peuvent être montées et fixées en usine sur les sections de tube, puis transportées par le navire de pose jusqu'au lieu de pose. Lorsque le tube est de grande longueur et enroulé sur une bobine de stockage, il devient alors pratiquement impossible d'enrouler le tube avec ses bagues de renfort sur une bobine car elles induiraient des parties rectilignes ou sensiblement rectilignes et non déformables dans l'enroulement du tube sur la bobine de stockage. Pour pallier cette difficulté, il est possible d'envisager de monter et fixer les bagues de renfort pendant les opérations de pose. Mais alors cela nécessiterait d'interrompre la pose, à intervalles réguliers, afin de monter et fixer les bagues de renfort.

Pour permettre l'enroulement du tube sur une bobine, US 4 364 692 propose d'enrouler une tige autour du tube, de manière serrée, de façon à former un certain nombre de spires qui peuvent être soudées par leurs extrémités à la tige elle-même et/ou au tube.

Suivant une autre forme de réalisation, les spires peuvent être individuelles en soudant les deux extrémités et en les espaçant régulièrement sur la partie du tube à renforcer. Tant que le tube est simple, l'accroissement du diamètre dans les parties renforcées peut être acceptable. Mais, lorsque le tube est du type à double enveloppe ("pipe in pipe" en anglais) c'est-à-dire comprenant un tube interne ("liner pipe" en anglais) et un tube externe ("carrier pipe" en anglais) qui est enfilé sur le tube interne, l'accroissement du diamètre du tube externe est inacceptable pour le transport et le stockage de grandes longueurs de tubes à double enveloppe.

La présente invention a pour but de proposer un dispositif limiteur de propagation d'une déformation d'une conduite ou tube rigide à double enveloppe et enroulable sur une bobine destinée à être entreposée sur un navire de pose ou système équivalent tel qu'une barge, plate-forme flottante, etc.

La présente invention a pour objet un dispositif selon la revendication 1.

Un avantage de la présente invention réside dans le fait que le tube à double enveloppe garde ses dimensions externes sans augmentation locale de son diamètre externe, tout en étant suffisamment souple pour être enroulé sur une bobine réceptrice.

Un autre avantage est qu'il est possible de monter en usine le dispositif dans le tube externe avant son positionnement autour du tube interne.

Un autre avantage réside dans le fait que le dispositif selon l'invention peut être logé dans l'espace annulaire sans modifier l'agencement interne du tube à double enveloppe qui comprend généralement des écarteurs ("spacers" en anglais) et organes d'isolation thermique.

Selon une autre caractéristique de la présente invention, l'élément déformable est constitué par un noyau comprenant une gaine plastique sur laquelle est enroulé à faible pas un fil de forme, agrafé ou non, qui peut constituer une armature analogue à une carcasse interne ou à une voûte de pression ou à une frette, comme celles utilisées dans une conduite flexible dite "rough bore" ou "smooth bore" suivant que l'organe le plus interne de ladite conduite flexible est constitué par une gaine polymérique d'étanchéité interne ou une carcasse métallique, les structures de telles conduites flexibles étant bien connues des spécialistes et décrites dans les documents API (American Petroleum Institute) 17 B ou 17 J de 1988 ou 1997 qui sont inclus dans la description en tant que références.

Un avantage de cette caractéristique est qu'il n'est pas nécessaire de fabriquer un noyau spécial car il est disponible chez les fabricants des conduites flexibles et qu'il suffit de couper les noyaux disponibles à la longueur désirée et de les placer dans le tube externe dans les locaux de fabrication. De plus, le matériau plastique de la gaine est choisi judicieusement pour réaliser une barrière thermique afin d'améliorer l'isolation thermique au niveau du limiteur de propagation de la déformation.

D'autres avantages et caractéristiques de la présente invention apparaîtront plus clairement à la lecture de la description de plusieurs modes de réalisation, ainsi que des dessins annexés sur lesquels :
- la figure 1 est une représentation schématique et partielle en coupe d'un tube à double enveloppe muni du dispositif selon un premier mode de réalisation de l'invention ;
- la figure 2 est une vue schématique, partielle et en perspective de l'élément déformable utilisé sans gaine polymérique ;
- la figure 3 est une vue en perspective partiellement arrachée d'une partie d'un tube à double enveloppe selon un deuxième mode de réalisation du dispositif selon l'invention.

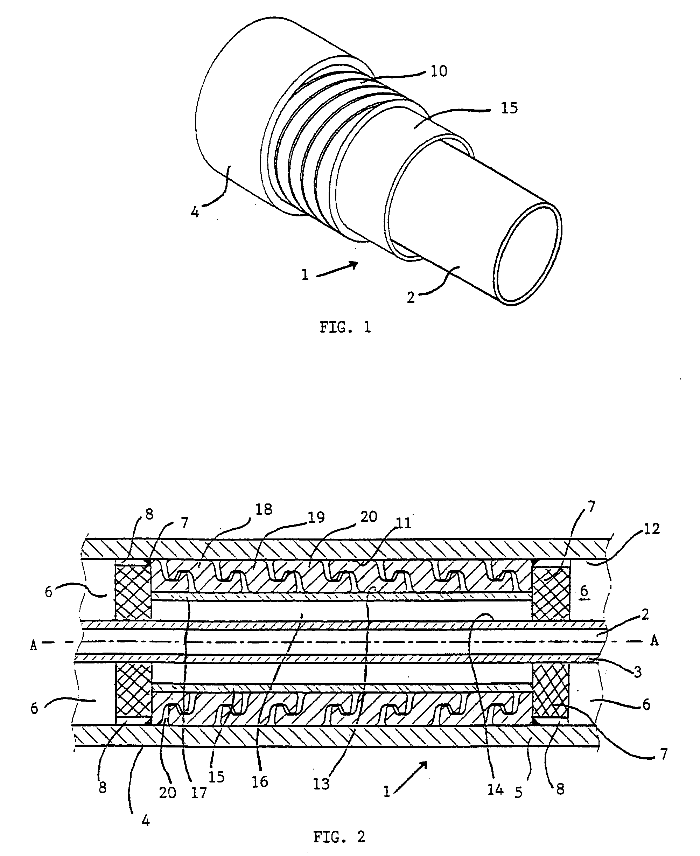

Selon un premier mode de réalisation représenté sur les figures 1 et 2, la conduite rigide 1 selon l'invention et d'axe longitudinal AA est du type à double enveloppe et qui comprend un tube interne cylindrique 2 dont l'épaisseur de la paroi 3, le diamètre et la nature du matériau sont choisis en fonction des conditions d'utilisation qui sont généralement, mais sans que cela soit limitatif, la température et la pression du fluide circulant dans le tube interne 1. Un tube externe 4 ("carrier pipe" en anglais) présente un diamètre suffisamment grand pour permettre de le glisser autour du tube interne 1 et avec une épaisseur de paroi 5 qui est apte à résister à la pression externe ou ambiante régnant dans le milieu dans lequel le tube rigide est immergé. De manière typique, un espace annulaire 6 est ménagé entre les tubes interne 2 et externe 4 et il est de l'ordre de plusieurs centimètres comptés radialement à partir de la face externe du tube interne 2 vers la paroi interne du tube externe 4. Dans un tube rigide à double enveloppe tel que décrit ci-dessus succinctement, des entretoises ou écarteurs ("spacers" en anglais) sont prévus sur toute la longueur du tube rigide, à intervalles réguliers, entre les tubes interne et externe. Ces entretoises ménagent à leur extrémité extérieure, celle qui est la plus proche de la paroi interne du tube externe, un léger espace 8 pour permettre le coulissement du tube externe 4 sur le tube interne 2, aux tolérances de fabrication près. De même, un isolant thermique est disposé autour du tube interne 2, entre les entretoises.

Selon la présente invention, il est prévu sur toute la longueur du tube rigide et à des intervalles déterminés, un ou plusieurs dispositifs souples capables de constituer des organes limiteurs de propagation d'une déformation susceptible de se produire dans le tube externe 4. Chaque dispositif comprend, dans le mode de réalisation des figures 1 et 2, au moins un élément déformable 10 qui est disposé dans l'espace annulaire 6 et dont la face extérieure 11 est en contact avec la paroi interne 12 sur au moins deux points mais de préférence sur toute la longueur de la face extérieure 11 du tube externe et dont la face intérieure 13 est éloignée de la paroi externe 14 du tube interne 2. Le dispositif comprend également une gaine par exemple polymérique 15 qui est appliquée sur la face intérieure 13 de l'élément déformable 10, l'épaisseur de la gaine 15 étant telle qu'un espace 16 est ménagé entre sa face interne 17 et la paroi externe 14 du tube interne 2. La gaine 15 qui peut être étanche est utilisée comme barrière thermique pour assurer une isolation thermique améliorée.

L'élément déformable 10 est, par exemple, réalisé à partir d'un fil de forme agrafé, ou non enroulé tel que celui représenté sur la figure 2, les spires consécutives 18 et 19 ménageant entre elles un déjoint 20 qui aide à la déformation en courbure de l'élément déformable 10 au cours de l'enroulement du tube rigide 1 sur une bobine non représentée.

La longueur de l'élément déformable 10 est comprise entre 0,5 m et 5 m et peut être délimité par deux butées 7 correctement espacées.

L'ensemble élément déformable 10 et gaine 15 constitue un noyau qui est utilisé, dans les conduites flexibles usuelles, en tant que voûte de pression et gaine interne d'étanchéité. De ce fait, il est possible d'utiliser ce noyau qui est disponible chez les fabricants de conduites flexibles, de le couper à la longueur désirée, de l'introduire dans le tube externe 4 puis de le fixer par tout moyen approprié sur la paroi intérieure 12 dudit tube externe 4. Parmi les moyens appropriés de fixation, on peut souder au moins une spire d'extrémité, et de préférence, la première et la dernière spire de l'élément déformable 10 sur la paroi intérieure 12 du tube externe 4.

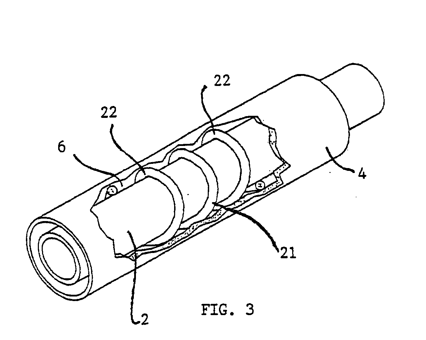

Dans un autre mode de réalisation représenté sur la figure 3, le dispositif limiteur selon l'invention peut être constitué par un ressort 21 qui est enroulé autour du tube interne 2 mais sans contact avec ce dernier, le contact permanent d'au moins certaines des spires 22 du ressort 21 étant effectué sur la paroi interne du tube externe 4. La mise en place du ressort 21 dans l'annulaire 6 du tube rigide 1 peut être réalisée de diverses manières. Dans un exemple, il est préférable de monter le ressort 21 dans le tube externe 4 en soudant au moins deux des spires, notamment les spires extrêmes, sur la paroi interne du tube externe 4, puis de faire coulisser ce dernier avec ses ressorts régulièrement répartis sur le tube interne 2, de la manière habituelle. Il serait également possible d'insérer les ressorts 21 les uns après les autres sous la forme précontrainte dans le tube externe, de sorte qu'en se détendant chaque ressort 21 vienne en contact avec la paroi interne du tube externe 4 et sans possibilité de glisser lors de l'enroulement du tube rigide 1 sur la bobine réceptrice.

Il serait également possible de constituer l'élément déformable par une armature qui serait mise en torsion avant son introduction dans l'espace annulaire et qui, après introduction, serait capable de revenir à l'état initial de façon que la face extérieure vienne en contact permanent avec la paroi interne du tube externe, ladite armature étant constituée par un enroulement hélicoïdal d'un fil de forme, agrafé ou non, du type de celui utilisé pour réaliser une voûte de pression, une carcasse interne ou une frette.

Pour maintenir en place ladite armature, plusieurs moyens peuvent être envisagés. Comme précédemment, il est possible de laisser l'armature se détendre et venir en contact permanent sur la paroi interne du tube externe ou de souder une ou les deux spires d'extrémité de l'armature sur ladite paroi interne. Un autre moyen consiste à fixer, en des endroits prédéterminés de la paroi interne, des cales sur lesquelles viendront en appui au moins une des spires d'extrémité de l'armature.

## Revendications

1. Dispositif limiteur de propagation d'une déformation apparaissant sur un tube extérieur d'une conduite ou tube rigide (1) à double enveloppe et d'axe longitudinal (AA), ledit tube extérieur étant disposé autour d'un tube interne, lesdits tubes externe (4) et interne (2) étant séparés par un espace annulaire (6), **caractérisé en ce que** le dispositif est constitué par au moins un élément de révolution et déformable dans une direction transversale par rapport audit axe longitudinal, ledit élément déformable (10) étant disposé dans l'espace annulaire (6) et comportant une face extérieure (11) qui est en contact avec la paroi interne (12) du tube externe (4) sur au moins deux points, l'élement (10) étant sans contact avec le tube interne (2)

2. Dispositif selon la revendication 1, **caractérisé en ce que** la face intérieure (13) de l'élément déformable (10) est recouverte au moins partiellement par une gaine (15).

3. Dispositif selon la revendication 1 ou 2, **caractérisé en ce que** l'élément déformable est constitué par un enroulement spiralé d'un fil de forme agrafé.

4. Dispositif selon la revendication 1 ou 2, **caractérisé en ce que** l'élément déformable est constitué par un enroulement spiralé d'un fil de forme non agrafé.

5. Dispositif selon l'une des revendications 1 à 4, **caractérisé en ce que** l'élément déformable (10) est constitué par un enroulement spiralé. d'un fil de forme dont au moins une spire d'extrémité est fixée sur la paroi interne (12) du tube externe (4).

6. Dispositif selon la revendication 2, **caractérisé en ce que** la gaine (15) est une gaine polymérique constituant une barrière thermique.

7. Dispositif selon l'une des revendications 1 à 6, **caractérisé en ce que** la longueur de l'élément déformable (10) est comprise entre 0,5 et 5 m.

8. Dispositif selon les revendications 2 à 6, **caractérisé en ce qu'**un intervalle annulaire est ménagé entre la gaine (15) et le tube interne (2), ledit intervalle étant suffisant pour permettre de glisser ledit tube interne (2) dans le tube externe (4).

9. Dispositif selon la revendication 1, **caractérisé en ce que** l'élément déformable (10) est constitué par un ressort (21) expansible radialement et qui est logé autour du tube interne (2) et dans l'espace annulaire (6), l'expansion du ressort provoquant la mise en contact permanent d'au moins certaines des spires sur la paroi interne du tube externe.

10. Dispositif selon la revendication 1, **caractérisé en ce que** l'élément déformable est constitué par une armature qui est mise en torsion avant une introduction dans l'espace annulaire et qui après introduction est capable de revenir à l'état initial de façon que la face extérieure vienne en contact permanent avec la paroi interne du tube externe.

11. Dispositif selon la revendication 10, **caractérisé en ce qu'**il comprend des cales d'appui qui sont fixées sur la paroi interne du tube externe en des endroits prédéterminés et sur lesquelles prend appui au moins une spire d'extrémité de ladite armature.

## Patentansprüche

1. Vorrichtung zur Begrenzung der Ausbreitung einer Deformation, die am Außenrohr einer starren doppelwandigen Leitung oder Röhre (1) mit Längsachse (AA) auftritt, wobei das Außenrohr um ein Innenrohr herum angeordnet ist und das Außenrohr (4) und Innenrohr (2) durch einen Ringraum (6) getrennt sind, **dadurch gekennzeichnet, dass** die Vorrichtung besteht aus mindestens einem Wicklungselement, das in einer Richtung quer zur Längsachse verformbar ist, wobei das verformbare Element (10) in dem Ringraum (6) angeordnet ist und eine Außenfläche (11) aufweist, die an mindestens zwei Punkten in Berührung mit der Innenwand (12) des Außenrohres (4) ist, wobei das Element (10) berührungsfrei mit dem Innenrohr (2) ist.

2. Vorrichtung nach Anspruch 1, **dadurch gekennzeichnet, dass** die Innenfläche (13) des verformaren Elementes (10) mindestens teilweise mit einer Auskleidung (15) bedeckt ist.

3. Vorrichtung nach Anspruch 1 oder 2, **dadurch gekennzeichnet, dass** das verformbare Element von einer Spiralwicklung eines Drahtes mit Verhakungsform gebildet ist.

4. Vorrichtung nach Anspruch 1 oder 2, **dadurch gekennzeichnet, dass** das verformbare Element von einer Spiralwicklung eines nicht verhakten Profildrahtes gebildet ist.

5. Vorrichtung nach einem der Ansprüche 1 bis 4, **dadurch gekennzeichnet, dass** das verformbare Element (10) von einer Spiralwicklung eines Profildrahtes gebildet ist, von der mindestens eine Endwindung an der Innenwand (12) des Außenrohrs (4) befestigt ist.

6. Vorrichtung nach Anspruch 2, **dadurch gekennzeichnet, dass** die Auskleidung (15) eine Auskleidung aus Polymer ist, die eine thermische Sperre bildet.

7. Vorrichtung nach einem der Ansprüche 1 bis 6, **dadurch gekennzeichnet, dass** die Länge des verformbaren Elementes (10) zwischen 0,5 und 5 m liegt.

8. Vorrichtung nach den Ansprüchen 2 bis 6, **dadurch gekennzeichnet, dass** ein Ringspalt zwischen der Auskleidung (15) und dem Innenrohr (2) vorgesehen ist, der ausreichend ist, um eine Verschiebung des Innenrohrs (2) in dem Außenrohr (4) zu gestatten.

9. Vorrichtung nach Anspruch 1, **dadurch gekennzeichnet, dass** das verformbare Element (10) von einer radial aufweitbaren Feder (21) gebildet ist, die um das Innenrohr (2) herum und in dem Ringraum (6) angeordnet ist, wobei die Aufweitung der Feder ein bleibendes Inberührungbringen mindestens einiger der Windungen an der Innenwand des Außenrohres bewirkt.

10. Vorrichtung nach Anspruch 1, **dadurch gekennzeichnet, dass** das verformbare Element von einer Armierung gebildet ist, die vor der Einführung in den Ringraum unter Torsion gesetzt wird und nach der Einführung in den Ausgangszustand zurückkehren kann derart, dass die äußere Fläche in permanente Berührung mit der Innenwand des Außenrohres gelangt.

11. Vorrichtung nach Anspruch 10, **dadurch gekennzeichnet, dass** sie Stützkeile aufweist, die an der Innenwand des Außenrohres an vorgegebenen Stellen befestigt sind, und an denen sich mindestens eine Endwindung der Armierung abstützt.

## Claims

1. A device for arresting the propagation of a buckle occurring on an outer pipe of a double-walled rigid tube or pipe (1) of longitudinal axis (AA), said outer pipe being placed around an inner pipe, said outer (4) and inner (2) pipes being separated by an annular space (6), **characterized in that** the device consists of at least one element having symmetry of revolution and being deformable in a direction transverse to said longitudinal axis, said deformable element (10) being placed in the annular space (6) and having an external face (11) which is in contact with the internal wall (12) of the outer pipe (4), at least at two points, the element (10) being without contact with inner pipe (2).

2. The device as claimed in claim 1, **characterized in that** the internal face (13) of the deformable element (10) is at least partially covered with a sheath (15).

3. The device as claimed in claim 1 or 2, **characterized in that** the deformable element consists of a spiraled winding of an interlocked profiled wire.

4. The device as claimed in claim 1 or 2, **characterized in that** the deformable element consists of a spiraled winding of a non-interlocked profiled wire.

5. The device as claimed in one of claims 1 to 4, **characterized in that** the deformable element (10) consists of a spiraled winding of a profiled wire, at least one end turn of which is fastened to the internal wall (12) of the outer pipe (4).

6. The device as claimed in claim 2, **characterized in that** the sheath (15) is a polymeric sheath constituting a thermal barrier.

7. The device as claimed in one of claims 1 to 6, **characterized in that** the length of the deformable element (10) is between 0.5 and 5 m.

8. The device as claimed in claims 2 to 6, **characterized in that** an annular gap is left between the sheath (15) and the inner pipe (2), said gap being sufficient to allow said inner pipe (2) to slide in the outer pipe (4).

9. The device as claimed in claim 1, **characterized in that** the deformable element (10) consists of a radially expandable spring (21) lodged around the inner pipe (2) in the annular space (6), the expansion of the spring causing at least some of the turns to be permanently in contact with the internal wall of the outer pipe.

10. The device as claimed in claim 1, **characterized in that** the deformable element consists of a reinforcement which is twisted before it is inserted into the annular space and which, after insertion, is capable of recovering its initial state so that the external face comes into permanent contact with the internal wall of the outer pipe.

11. The device as claimed in claim 10, **characterized in that** it includes bearing blocks which are fastened to the internal wall of the outer pipe at predetermined points and on which at least one end turn of said reinforcement bears.
